# EUROPEAN PATENT SPECIFICATION

(11) **EP 0 297 409 B1**
(45) Date of publication and mention of the grant of the patent: **26.10.1994**
(21) Application number: 88109927.9
(22) Date of filing: 22.06.1988
(51) Int. Cl.: G02B 6/44

(54) **Optical fiber cable**
Optisches Kabel
Câble optique

(30) Priority: 30.06.1987 IT 2110587
(43) Date of publication of application: 04.01.1989
(73) Proprietor: PIRELLI CAVI S.p.A., 20126 Milano (IT)
(72) Inventor: Calzolari, Pietro, Milan (IT); Portinari, Antonio, Sesto San Giovanni (Milan) (IT)
(74) Representative: Sirtori, Giorgio

(56) References cited:
- EP-A- 0 142 961
- EP-A- 0 200 914
- DE-A- 2 854 746
- GB-A- 2 167 424
- US-A- 3 865 466
- US-A- 4 148 560
- US-A- 4 191 448

## Description

The present invention concerns an optical fiber cable of the type comprising, inside a sheath, a core of plastic material embedding small pipes which extend longitudinally along the cable and contain optical fibers in loose condition.

Already known cables of the above indicated type are for instance those described in the US Patents Nos. 3 865 466 and 4 191 448.

These already known cables show the following disadvantages. A first disadvantage is due to the impossibility of making shunts of optical fibers from the cable without interrupting completely its continuity. In fact, once the cable sheath is removed from the cable region where a shunt is to be performed, it is not possible to locate the small pipes containing the optical fibers.

The only way of effecting said location is to cut the cable completely along a plane perpendicular to the cable longitudinal axis. It follows that, in said already known cables, whenever it is desired to make a shunt of the optical fibers contained in one of the cable's small pipes, it is necessary to cause a discontinuity in all the cable components, and consequently also in the small pipes and in the optical fibers not concerned with the shunt and then to restore said continuity between the cable elements and in particular between the small pipes and the optical fibers not concerned with the shunt.

This operation, besides being extremely complicated, involves the risk of causing damage to the cable, for instance of giving rise to attenuation in the signals transmitted by the optical fibers not involved in the shunt, due to incorrectnesss in the performance of the connections effected to restore the cable continuity.

A further drawback shown by the already known cables of this type is represented by a limitation in the selection of the substances, able to absorb permanently any trace of hydrogen, which may have been introduced in the cable to protect the optical fibers against the harmful action which hydrogen might have on them.

Within the sheath of such cables the space available for the admission of substances able to absorb hydrogen is represented only by the small pipes containing the optical fibers.

Therefore, the optical fibers are necessarily in direct contact with the substances which must retain permanently hydrogen on themselves to prevent the latter from damaging said optical fibers.

The direct contact between the optical fibers and the substances able to absorb hydrogen leads to the exclusion of all those substances whose presence might damage the optical fibers.

For example, it is impossible to use in the conventional cables of this type those substances, able to absorb hydrogen, which contain granules of material having a size over 10 micron, since these granules, hindering the free motion of the optical fibers inside the small pipes, would generate micro-bendings in the fibers, with their consequent impairment.

The present invention aims at providing an optical fiber cable which is devoid of the above described disadvantages and which allows an easy and reliable performance of shunts of optical fibers from the cable without the risk of causing damage to the latter as well as the introduction, without any limitation in its selection, of any substance able to retain on itself traces of hydrogen or relevant amounts of the same in order to protect the optical fibers against the prejudicial action which hydrogen might have on them.

Accordingly, the subject matter of the present invention is an optical fiber cable which comprises a sheath enclosing a core of plastic material in which are embedded a plurality of small pipes extending longitudinally along the core, which pipes contain at least one optical fiber in loose condition, the cable being characterized in that the small pipes are made of opaque material whilst the core is made of transparent material and in that the radially outermost surface of the core is provided with recesses extending along the core itself in a direction parallel to that of the small pipes, at least one recess being provided in each region of said core comprised between adjacent small pipes.

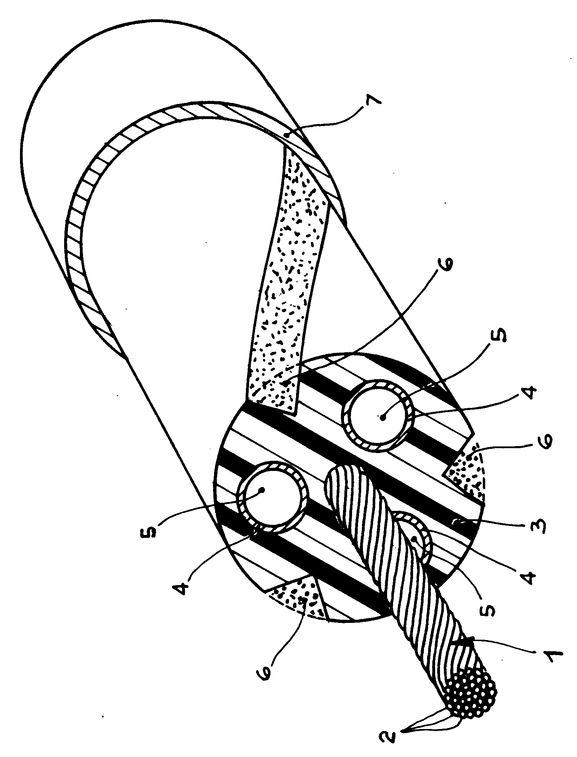

The present invention will be more clearly understood from the following detailed description given by way of non limiting example and made with reference to the figure of the attached sheet of drawing, which represents in perspective view, with parts broken away, a portion of a particular cable according to the invention.

As it can be seen from said figure, the cable therein illustrated comprises, from the inside outwards, the following components.

A strand 1, formed by stranding together a plurality of wires 2 made of a material having high mechanical characteristics, as for instance steel, an aromatic polyamide, nylon and the like, occupies the radially innermost portion of the cable.

In particualar, said strand 1 is sized to withstand the mechanical stresses suffered by the cable during its manufacture and laying.

A core 3 of plastic material is applied around strand 1, preferably by means of an extrusion process.

A substantial feature of said core 3, for the purposes of the present invention, is that it can be made of any transparent plastic material. In this specification the term "transparent", referred to the material forming the core of a cable, means any material through which the elements embedded in the core can be clearly seen or simply located. Examples of transparent plastic materials used to form the cable core 3 are polyethylene, polypropylene, nylon.

The cable core 3 embeds small pipes 4 which contain optical fibers 5 in loose condition. The small pipes 4 represented in the figure have in section a circular shape, but this must not be considered as restrictive, and extend longitudinally along the core along a helical path which can be of closed or of open type, the latter term meaning that the helix is formed by alternative S-shaped and Z-shaped portions.

As essential feature for the purposes of the present invention is instead that the small pipes are made of opaque material.

Examples of opaque materials used to build up the small pipes 4 are metallic materials and plastic materials of any whichever type, provided that they are coloured with inorganic pigments. Preferably, the small pipes 4 of the cable are differently coloured to allow their location.

The core 3, at its radially outermost surface, is provided with recesses 6 which extend longitudinally along the core and have a path identical to that of the small pipes 4 embedded in the latter. Said recesses 6 which, in a section perpendicular to the cable axis, are preferably wedge-shaped, are provided in a number at least equal to the number of small pipes 4 embedded in the core and at least one recess is present in each region of said cable core comprised between adjacent small pipes.

The recesses 6 are filled with, and in general contain, any substance capable of retaining on itself in a permanent way either physically or chemically both traces and high amounts of hydrogen so as to ensure that the latter cannot reach in any way the optical fibers loosely contained in the small pipes 4 and damage them.

Already known substances able to carry out the above indicated action are for instance the powders of metallic elements able to absorb physically hydrogen, as those described in the Italian patent application No. 20699A/84 of the same Applicant.

Alternatively, and still by way of example, substances able to carry out the above indicated function are the compositions suitable to react chemically with hydrogen, as those described in the Italian patent applications Nos. 23 729 A/84 , 22 022 A/85, 22 390 A/85 and 20 310 A/85 of the same Applicant.

A sheath 7, made for instance of metallic or plastic material and closing recesses 6, is provided around the cable core 3. The cable described above and illustrated in the figure represents only a particular embodiment of a cable according to the invention, since the latter comprises any cable having the following characteristics:
- the cable core is made of transparent plastic material and embeds small pipes of opaque material containing the optical fibers in loose condition,
- the radially outermost surface of the cable core is provided with recesses extending longitudinally along said core (along a path preferably indentical to that of the small pipes), in which is present a substance able to retain permanently on itself both very small traces and large amounts of hydrogen; in particular, in any cable according to the invention, at least one recess is present in each region of the cable core comprised between pairs of adjacent small pipes.

Therefore, the present invention includes in its scope also a cable differing from that illustrated in the figure only in that the strand 1 is lacking.

From the above description and from the considerations reported herebelow it can be understood that the cables according to the invention achieve the purposes they intend to reach.

In fact, the presence in a cable of a core of transparent plastic material which embeds small pipes of opaque material, in case having different colours, gives the possibility, when the sheath is removed from the cable, to locate immediately the position of the small pipes, avoiding the need, at present existing in conventional cables, of performing a complete cut of the cable to locate the small pipes it contains.

Said immediate location of the small pipes inside the cable core leads to the possibility, when a shunt concerning the optical fibers contained in one single small pipe is to be effected in the cable, of separating the portion of cable core containing said single small pipe and of effecting only onto it the operations required for the shunt, without being compelled to act on all the other cable components and consequently on the other small pipes and optical fibers contained therein.

Consequently, no risk is originated to cause damages in the cable during the performance of a shunt.

Further, the fact that the outer surface of the cable core is provided with recesses which have along it a path identical to that of the small pipes and which, in pairs, are arranged side-by side with respect to the individual small pipes, facilitates the separation from the cable of core portions containing only one small pipe.

In fact said recesses constitutes a guide for any blade used to effect in the core cuts parallel to one small pipe to be able to separate it from the others contained in the cable.

Moreover the recesses, flanking in pairs the individual small pipes containing the optical fibers, give the possibility of introducing into them any substance already known per se, able to retain on itself even very small traces of hydrogen and of ensuring an efficient protection of the optical fibers.

In this way it is not necessary, as in the already known cables, to limit the selection of the substance able to retain hydrogen permanently, since in the cable according to the invention these substances are not in direct contact with the optical fibers and therefore cannot exert onto them any negative influence.

Although only some embodiments of the invention have been described and illustrated, it is understood that it includes in its scope any possible variation deriving from the above indicated inventive idea.

## Claims

1. An optical fiber cable which comprises a sheath (7) enclosing a core (3) of plastic material in which are embedded a plurality of small pipes (4), extending longitudinally along the core (3), which pipes (4) contain at least one optical fiber (5) in loose condition, the cable being characterized in that the small pipes (4) are made of opaque material whilst the core (3) is made of transparent material and in that the radially outermost surface of the core (3) is provided with recesses (6) extending along the core itself in a direction parallel to that of the small pipes (4), at least one recess (6) being provided in each region of said core (3) comprised between adjacent small pipes (4).

2. A cable as in claim 1, characterized in that the recesses (6) contain any substance already known per se of a type able to retain permanently on itself even very small traces of hydrogen.

3. A cable as in claim 1, characterized in that, in a section perpendicular to the cable axis, said recesses (6) are wedge-shaped.

4. A cable as in claim 1, characterized in that the small pipes (4) of opaque material present in the cable are of different colour.

## Patentansprüche

1. Optisches Faserkabel mit einer einen Kern (3) umschließenden Ummantelung (7) aus Kunststoffmaterial, in dem eine Vielzahl kleiner Röhrchen (4) eingelassen ist, die sich längs des Kerns (3) erstrecken, wobei die Röhrchen (4) mindestens eine lose optische Faser (5) enthalten, dadurch **gekenn****zeichnet**, daß die kleinen Röhrchen (4) aus undurchsichtigem Material gefertigt sind, während der Kern (3) aus transparentem Material besteht, und dadurch, daß die äußerste radiale Oberfläche der Kerns (3) mit Vertiefungen (6) versehen ist, die entlang des Kerns, parallel zu den kleinen Röhrchen (4) verlaufen, wobei in jedem Bereich eines Kerns (3) mindestens eine Vertiefung (6) vorgesehen ist, wobei der Bereich aus der zwischen zwei benachbarten Röhrchen (4) gelegenen Fläche besteht.

2. Kabel nach Anspruch 1, dadurch gekennzeichnet, daß die Vertiefungen (6) eine an sich bekannte Substanz der Art enthalten, die in sich dauerhaft auch nur kleine Mengen Wasserstoff aufnehmen kann.

3. Kabel nach Anspruch 1, dadurch gekennzeichnet, daß die Vertiefungen (6) im zur Kabelachse senkrechten Querschnitt keilförmig ausgebildet sind.

4. Kabel nach Anspruch 1, dadurch gekennzeichnet, daß die im Kabel verlaufenden Röhrchen (4) aus undurchsichtigem Material verschiedene Farben aufweisen.

## Revendications

1. Câble optique comprenant une gaine (7) recouvrant un noyau (3) en matériau plastique dans lequel est insérée une pluralité de petits canaux (4) s'étendant longitudinalement le long du noyau (3), lesdits canaux (4) contenant au moins une fibre optique (5) logée avec jeu, câble caractérisé en ce que les petits canaux (4) sont faits en matériau opaque alors que le noyau (3) est fait en matériau transparent, et en ce que la surface radiale la plus à l'extérieur du noyau (3) est pourvue d'évidements (6) s'étendant le long du noyau même, dans une direction parallèle à celle des petits canaux (4), au moins un évidement (6) étant ménagé dans chaque région dudit noyau (3) comprise entre des canaux (4) voisins.

2. Câble selon la revendication 1, caractérisé en ce que les évidements (6) contiennent une substance connue en soi, du type permettant de retenir de manière permanente sur elle-même de très faibles traces d'hydrogène.

3. Câble selon la revendication 1, caractérisé en ce qu'en section perpendiculaire à l'axe du câble, lesdits évidements (6) dont en forme de coin.

4. Câble selon la revendication 1, caractérisé en ce que les petits canaux (4) en matériau opaque présents dans le câble, sont de couleurs différentes.
